# EUROPÄISCHE PATENTANMELDUNG

(11) **EP 2 012 024 A2**
(43) Veröffentlichungstag der Anmeldung: **07.01.2009**
(21) Anmeldenummer: 08011286.5
(22) Anmeldetag: 20.06.2008
(51) Int. Cl.: F16B 5/06, F16B 13/08

(54) **Befestigungsklammer zur Verbindung zweier aufeinanderliegender flacher Bauteile**

(30) Priorität: 02.07.2007 DE 102007030613
(71) Anmelder: EJOT GmbH & Co. KG, 57334 Bad Laasphe (DE)
(72) Erfinder: Baumbach, Gerald, 99891 Tabarz (DE)
(74) Vertreter: Bardehle, Heinz

(57) **Zusammenfassung**

Die Erfindung betrifft eine Befestigungsklammer zur Verbindung zweier aufeinanderliegender flacher Bauteile (12,13), die je einen mit dem anderen fluchtenden Durchbruch (14,15) aufweisen. Die Befestigungsklammer weist ein mit zwei Armen (4) versehenes Aufsatzteil (1) zur Anlage an dem oberen Bauteil (12) und einem an dem Aufsatzteil (1) angebrachten Spreizteil (8) zum federnden Einrasten des unteren Bauteils (13) auf, wobei das Aufsatzteil (1) mit dem Spreizteil (8) einen mit den Durchbrüchen (14,15) fluchtenden Lochdurchgang (3,11) bilden und das Aufsatzteil (1) eine Kopfschraube (16) aufnimmt, die mit einem Gewindeschaft (19) die beiden Durchbrüche (14,15) und den Lochdurchgang (3,11) durchsetzt und mit ihrem Kopf (17) zwischen den beiden Armen (4) sowohl in einer Vormontagestellung als auch in einer Haltestellung in die Arme (4) einrastbar ist. Aus der Vormontagestellung geht die Schraube (16) beim Eindrehen in den Lochdurchgang (3,11) und Aufspreizen des Spreizteils (8) in die Befestigungslage über, in der der Gewindeschaft (19) das Spreizteil (8) in seiner gespreizten Lage hält und die beiden Bauteile (12,13) zusammendrückt.

## Beschreibung

Die Erfindung bezieht sich auf eine Befestigungsklammer zur Verbindung zweier aufeinanderliegender flacher Bauteile, die je einen mit dem anderen fluchtenden Durchbruch aufweisen.

Derartige Befestigungsklammern werden häufig verwendet, um an einer ein flaches Bauteil bildenden Wandung irgendwelche anderen Bauteile, die ebenfalls eine eigene flache Wandung besitzen, zu befestigen. Hierzu wird auf die DE 619 487 verwiesen, bei der es sich um eine Vorrichtung zum Befestigen der Innenverkleidung an Karosserieteilen von Kraftfahrzeugen handelt. Diese Befestigungsklammer, welche die beiden flachen Bauteile nicht in aufeinanderliegender Position, sondern in einem geringen Abstand hält, besteht im Wesentlichen aus einer Spreizfeder, die miteinander fluchtende Durchbrüche der beiden Bauteile durchsetzt und sich mit zwei nach außen wegfedernden Armen und nach außen weisenden Abbiegungen in die Durchbrüche einsetzen lässt und sich in diesem verrastet, wobei die Vorsprünge das eine Bauteil so halten, dass dieses den Abstand zu dem anderen Bauteil hält. Eine besondere Sicherung der bekannten Befestigungsklammer in ihrer die beiden Bauteile haltenden Lage ist nicht vorgesehen, die Befestigungsklammer kann durch Zusammendrücken ihrer betreffenden federnden Teile stets von den Bauteilen abgenommen werden.

Im Gegensatz zu der technischen Wirkung der bekannten Befestigungsklammer handelt es sich, wie oben gesagt, bei der erfindungsgemäßen Befestigungsklammer um eine solche zur Verbindung zweier aufeinanderliegender flacher Bauteile, die einerseits eine einfache Anbringung an einem der beiden Bauteile ermöglichen soll und andererseits das andere Bauteil in aneinander anliegender Position mittels einer Verrastung festhalten kann, die nur durch Lösen der Verrasterung geöffnet werden kann. Erfindungsgemäß geschieht dies mit einer Befestigungsklammer, die durch ein mit zwei Armen versehenes Aufsatzteil zur Anlage an dem oberen Bauteil und einem an dem Aufsatzteil angebrachten Spreizteil zum federnden Einrasten des unteren Bauteils gekennzeichnet ist, wobei das Aufsatzteil mit dem Spreizteil einen mit den Durchbrüchen fluchtenden Lochdurchgang bilden und das Aufsatzteil eine Kopfschraube aufnimmt, die mit einem Gewindeschaft die beiden Durchbrüche und den Lochdurchgang durchsetzt und mit ihrem Kopf zwischen den beiden Armen sowohl in einer Vormontagestellung als auch in einer Haltestellung in die Arme einrastbar ist, aus denen die Schraube beim Eindrehen in den Lochdurchgang und Aufspreizen des Spreizteils in die Befestigungslage übergeht, in der der Gewindeschaft das Spreizteil in seiner gespreizten Lage hält und die beiden Bauteile zusammendrückt.

Diese Befestigungsklammer gestattet es, durch einfaches Einstecken in die Durchbrüche beider Bauteile eine Vormontagestellung einzunehmen. Durch die Schraube mit ihrem Kopf und die Verrasterung des Kopfes gegenüber den Armen des Aufsatzteils wird der Befestigungsklammer eine Haltestellung gegeben, aus der sie nur durch gewolltes und bewusstes Lösen der Schraube gelöst werden kann. Damit ergibt sich eine einfache Montage und eine sichere Befestigung der beiden Bauteile aneinander, aus der diese durch Lösen der Schraube auch wieder freigegeben werden können.

Für das Einrasten des Kopfes der Schraube sieht man zweckmäßig an den Armen Ausnehmungen vor, in die der Kopf der Schraube einrastet.

Bei der Befestigungsklammer kann es sich um ein zweiteiliges Bauteil, bestehend aus Aufsatzteil und Spreizteil, handeln, wobei das Spreizteil in das Aufsatzteil einsteckbar ist. Andererseits ist es aber auch möglich, die Befestigungsklammer einstückig zu gestalten, wozu das Spreizteil und das Aufsatzteil aus einem Blechstück geformt werden.

In den Figuren ist ein Ausführungsbeispiel der Erfindung dargestellt. Es zeigen:
- Figuren 1a und 1b: das Aufsatzteil allein in zwei um 90° zueinander gedrehten Ansichten;
- Figuren 2a und 2b: das Spreizteil in zueinander um 90° gedrehten Ansichten;
- Figuren 3a und 3b: die Zusammenstellung von Aufsatzteil und Spreizteil mit zwei um 90° gegeneinander dargestellten Ansichten;
- Figuren 4a und 4b: die Befestigungsklammer, angebracht an zwei aufeinanderliegenden Bauteilen in der Vormontagestellung;
- Figuren 5a und 5b: die gleiche Befestigungsklammer in der Haltestellung;
- Figuren 6a und 6b: eine Darstellung ähnlich derjenigen gemäß den Figuren 4a und 4b unter Zugrundelegung einer einstückigen Befestigungsklammer.

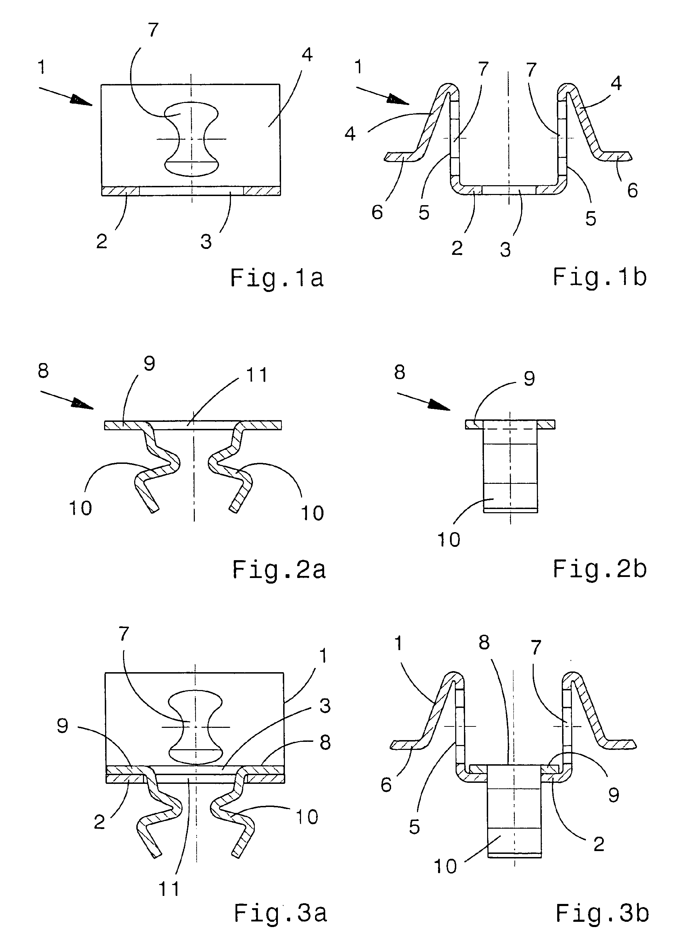

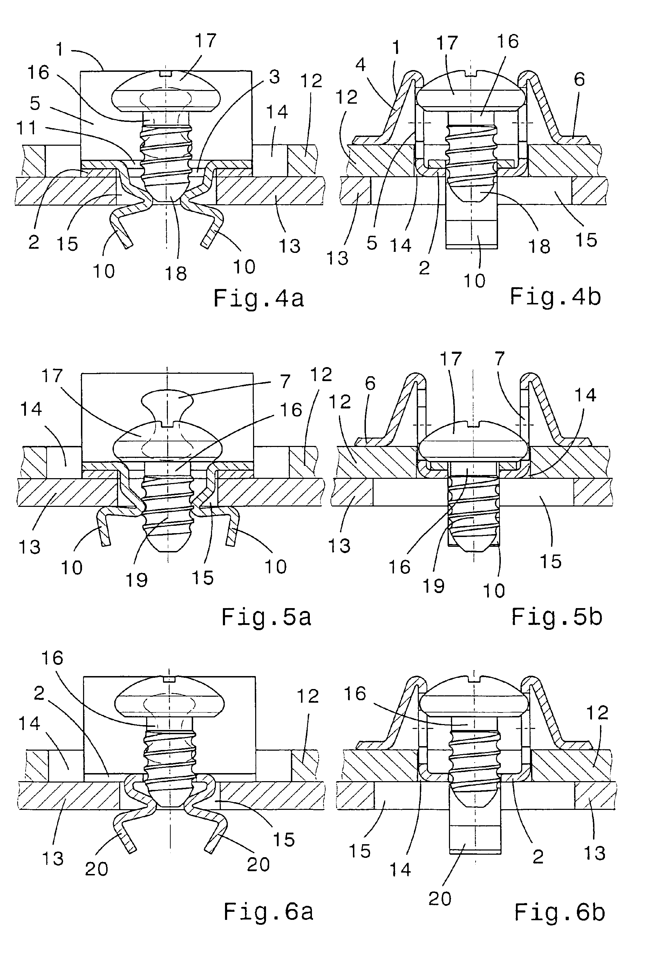

In den Figuren 1a und 1b ist in zwei um 90° gegeneinander verdrehten Ansichten das Aufsatzteil 1 allein dargestellt, das aus dem Boden 2 mit dem Lochdurchgang 3 und den Armen 4 besteht, die über die Stützteile 5 mit dem Boden 2 verbunden sind. Die Arme 4 gehen mit ihren Enden in Auflageteile 6 über, die zur Auflage an dem oberen Bauteil dienen, was in den Figuren 4, 5 und 6 dargestellt ist. In den Stützteilen 5 ist jeweils eine Ausnehmung 7 dargestellt, die zum Ein- und Ausrasten eines weiter unten beschriebenen Schraubenkopfes dient (siehe Figuren 4, 5 und 6).

Figuren 2a und 2b zeigen das Spreizteil 8, das das Tragteil 9 aufweist, aus dem die beiden Spreizlaschen 10 herausgebogen sind. In das Tragteil 9 ist der Lochdurchgang 11 eingelassen.

Das in den Figuren 1a und 1b dargestellte Aufsatzteil und das in den Figuren 2a und 2b dargestellte Spreizteil 8 sind zusammengesetzt in den Figuren 3a und 3b wiedergegeben. Wie ersichtlich, ist das Spreizteil 8 in den Lochdurchgang 3 des Aufsatzteils 1 eingesetzt, womit sich ein geschlossenes Bauteil ergibt, das im Wesentlichen Bestandteil der erfindungsgemäßen Befestigungsklammer bildet. Um das Aufsatzteil mit dem Spreizteil sicher zu verbinden, sind die beiden Teile im Bereich des Bodens 2 und des Tragteils 9 miteinander verschweißt.

In den Figuren 4a und 4b ist die Befestigungsklammer gemäß den Figuren 3a und 3b zusammen mit den beiden aufeinanderliegenden flachen Bauteilen 12 und 13 dargestellt. Das Bauteil 12 ist mit dem Durchbruch 14 und das Bauteil 13 mit dem Durchbruch 15 versehen. Die beiden Durchbrüche 14 und 15 fluchten miteinander. In die beiden Durchbrüche 14 und 15 ist die Befestigungsklammer so eingesetzt, dass das Aufsatzteil mit seinem Boden 2 auf dem unteren Bauteil 13 aufliegt und mit seinen Stützteilen 5 durch den Durchbruch 14 im oberen Bauteil 12 hindurch greift. Dabei liegen die Arme 4 über ihre Auflageteile 6 an dem oberen Bauteil 12 auf. Die beiden Spreizlaschen 10 ragen dabei durch den Durchbruch 15 im unteren Bauteil 13 hindurch.

In die Befestigungsklammer ist die Kopfschraube 16 eingesetzt, die sich in den Figuren 4a und 4b dargestellten Lage in der Vormontagestellung befindet, in der ihr Kopf 17 in die Ausnehmung 7 (siehe Figur 1a) hineinragt und in dieser eingerastet gehalten wird. Das von dem Kopf 12 abgewandte Ende 18 der Schraube 16 liegt an den Spreizlaschen 10 an, so dass die Schraube in der Vormontagestellung festgehalten wird.

In den Figuren 5a und 5b ist die Befestigungsklammer mit vollständig eingedrehter Schraube 16 dargestellt, in der sich ihr Gewindeschaft 19 zwischen die inneren Knickstellen der Spreizlaschen 10 eingedreht hat, so dass die Spreizlaschen 10 nach außen gedrückt sind und sich dabei hinter die Unterseite des Bauteils 13 setzen. Der Schraubenkopf 17 ist dabei in den unteren Teil der Ausnehmung 7 eingerastet, womit die Schraube 16 also in der in den Figuren 5a und 5b dargestellten Lage sicher in der nunmehr eingenommenen Befestigungslage gehalten wird. In dieser Lage drücken, wie gesagt, die Spreizlaschen 10 auf die eine Seite des Bauteils 13, während von der anderen Seite her die Arme 4 mit ihren Auflageteilen gegen das obere Bauteil 12 drücken, womit die beiden Bauteile 12 und 13 gegeneinander verspannt und in dieser Lage von der Befestigungsklammer sicher gehalten werden.

In den Figuren 6a und 6b ist eine Abwandlung der Gestaltung der Befestigungsklammer gemäß den Figuren 1 bis 3 und 4a und 4b dargestellt. Die Befestigungsklammer gemäß den Figuren 6a und 6b ist hier einstückig ausgebildet, und zwar dadurch, dass aus dem Boden 2 des Aufsatzteils die Spreizlaschen 20 herausgeformt und abgebogen sind, so dass also bei dieser Gestaltung eine einteilige Ausbildung der Befestigungsklammer vorliegt. Abgesehen davon ist die Funktion der Befestigungsklammer gemäß Figuren 6a und 6b die gleiche wie vorstehend dargestellt anhand der Figuren 4 und 5. Die Figuren 6a und 6b zeigen die Befestigungsklammer in der Vormontagestellung. Durch Eindrehen der Schraube 16 (wie dargestellt in den Figuren 5a und 5b) lässt sich die Befestigungsklammer gemäß Figuren 6a und 6b in gleicher Weise an den beiden Bauteilen 12 und 13 anklammern, wie dies vorstehend anhand der Figuren 5a und 5b beschrieben ist.

Es sei noch darauf hingewiesen, dass die Durchbrüche 3 und 11 (siehe Figuren 1 und 2) in einer solchen Größe ausgeformt sein können, dass auch bei eingesetzter Befestigungsklammer ein gewisser Spielraum der Anordnung der Bauteile 12 und 13 zueinander ermöglicht ist, indem z.B. das Bauteil 12 gegenüber dem Bauteil 13 in beliebiger Richtung etwas verschoben werden kann, was für die richtige Anbringung des oberen Bauteils 12 an dem unteren Bauteil 13 gegebenenfalls von Vorteil ist.

Wie aus Figur 1a ersichtlich, besitzt die Ausnehmung 7 eine solche Gestalt, dass zunächst in der Vormontagestellung (siehe Figuren 4a und 4b) der Schraubenkopf 17 in die gegebene Form der Ausnehmung 7 passt und in dieser Lage mit einer gewissen Sicherheit festgehalten wird. Beim Eindrehen der Schraube 16 (siehe Figuren 4 und 5) muss der Schraubenkopf die Einengung in der Mitte der Ausnehmung 7 überwinden, wobei sich die Stützteile 5 etwas nach außen wegbiegen müssen, womit also das Eindrehen der Schraube 16 durch einen gewissen Widerstand zunächst gehemmt wird. Wenn dann dieser Widerstand überwunden ist, gerät der Schraubenkopf 17 automatisch in den unteren Teil der Ausnehmung 7, wo er festgehalten wird. Dieser beim Eindrehen der Schraube 16 deutlich merkbare Übergang über den durch die Einengung in der Ausnehmung 7 gegebenen Widerstand deutet dem Benutzer an, dass nunmehr der Schraubenkopf 17 seine Befestigungslage erhalten hat, womit dem Benutzer ein deutliches Zeichen gegeben wird, dass die Befestigungsklammer richtig angebracht ist.

## Patentansprüche

1. Befestigungsklammer zur Verbindung zweier aufeinanderliegender flacher Bauteile (12, 13), die je einen mit dem anderen fluchtenden Durchbruch (14, 15) aufweisen, **gekennzeichnet durch** ein mit zwei Armen (4) versehenes Aufsatzteil (1) zur Anlage an dem oberen Bauteil (12) und einem an dem Aufsatzteil (1) angebrachten Spreizteil (8) zum federnden Einrasten des unteren Bauteils (13), wobei das Aufsatzteil (1) mit dem Spreizteil (8) einen mit den Durchbrüchen (14, 15) fluchtenden Lochdurchgang (3, 11) bilden und das Aufsatzteil (1) eine Kopfschraube (16) aufnimmt, die mit einem Gewindeschaft (19) die beiden Durchbrüche (14, 15) und den Lochdurchgang (3, 11) durchsetzt und mit ihrem Kopf (17) zwischen den beiden Armen (4) sowohl in einer Vormontagestellung als auch in einer Haltestellung in die Arme (4) einrastbar ist, aus denen die Schraube (16) beim Eindrehen in den Lochdurchgang (3, 11) und Aufspreizen des Spreizteils (8) in die Befestigungslage übergeht, in der der Gewindeschaft (19) das Spreizteil (8) in seiner gespreizten Lage hält und die beiden Bauteile (12, 13) zusammendrückt.

2. Befestigungsklammer nach Anspruch 1, **dadurch gekennzeichnet, dass** die Arme (4) Ausnehmungen (7) aufweisen, in die der Kopf (17) der Schraube (16) einrastet.

3. Befestigungsklammer nach Anspruch 1 oder 2, **dadurch gekennzeichnet, dass** das Spreizteil (8) in das Aufsatzteil (1) einsteckbar ist.

4. Befestigungsklammer nach Anspruch 1 oder 2, **dadurch gekennzeichnet, dass** das Spreizteil (8) und das Aufsatzteil (1) aus einem Blechstück geformt ist.
